# NOUVEAU FASCICULE DE BREVET EUROPEEN

(11) **EP 1 404 996 B2**
(45) Date de publication et mention de la décision concernant l'opposition: **08.09.2010**
(45) Mention de la délivrance du brevet: 22.02.2006
(21) Numéro de dépôt: 02767562.8
(22) Date de dépôt: 10.07.2002
(51) Int. Cl.: F16K 11/085

(54) **VANNE DE COMMANDE POUR UN CIRCUIT DE REFROIDISSEMENT D'UN MOTEUR**
STEUERVENTIL FÜR KÜHLSYSTEM EINES MOTORS
CONTROL VALVE FOR AN ENGINE COOLING CIRCUIT

(30) Priorité: 11.07.2001 FR 0109218; 24.04.2002 FR 0205139
(43) Date de publication de la demande: 07.04.2004
(73) Titulaire: VALEO THERMIQUE MOTEUR, 78321 La Verrière (FR)
(72) Inventeur: MARTINS, Carlos, F-78150 Le Chesnay (FR); CHANFREAU, Matthieu, F-78650 Saulx Marchais (FR)
(86) Numéro de dépôt international: PCT/FR2002/002433
(87) Numéro de publication internationale: WO 2003/006858

(56) Documents cités:
- DE-A- 3 133 633
- FR-A- 2 142 186
- FR-A- 2 656 668
- FR-A- 2 800 125
- GB-A- 1 394 032
- US-A- 4 146 055
- US-A- 4 398 562
- US-A- 5 927 330
- US-B1- 6 185 757
- PATENT ABSTRACTS OF JAPAN vol. 010, no. 227 (M-505), 7 août 1986 (1986-08-07) & JP 61 062679 A (MITSUBISHI HEAVY IND LTD;OTHERS: 01), 31 mars 1986 (1986-03-31)

## Description

L'invention se rapporte à une vanne de commande pour un circuit de circulation de fluide, ainsi qu'au circuit équipé d'une telle vanne.

Elle vise plus particulièrement à procurer une vanne de commande destinée à un circuit de refroidissement d'un moteur thermique de véhicule automobile.

Un tel circuit de refroidissement est parcouru par un fluide de refroidissement, habituellement de l'eau additionnée d'un antigel, qui circule en circuit fermé sous l'action d'une pompe de circulation.

Généralement, un tel circuit de refroidissement comprend plusieurs branches, dont une branche qui contient un radiateur de refroidissement, une branche qui constitue une dérivation du radiateur de refroidissement et une branche qui contient un radiateur, encore appelé "aérotherme", servant au chauffage de l'habitacle.

Il est connu d'utiliser une vanne thermostatique qui comprend une entrée de fluide reliée à la sortie du moteur et deux sorties de fluide qui correspondent respectivement à la branche contenant le radiateur de refroidissement et à la branche formant dérivation.

Lors du démarrage à froid du moteur, et tant que la température du fluide de refroidissement n'atteint pas un certain seuil, la vanne fait circuler le fluide de refroidissement dans la branche de dérivation en court-circuitant le radiateur de refroidissement. Dès que la température du fluide de refroidissement atteint et dépasse le seuil précité, le fluide de refroidissement traverse le radiateur de refroidissement et contourne la branche de dérivation.

Généralement, le fluide de refroidissement circule en permanence dans la branche qui contient le radiateur de chauffage, le chauffage de l'habitacle étant alors obtenu par mixage d'un flux d'air froid et d'un flux d'air chaud qui a balayé le radiateur de chauffage. Il est connu aussi de prévoir une vanne séparée sur le radiateur de chauffage pour régler le débit de fluide de refroidissement qui le traverse.

Dans des réalisations existantes, on utilise des vannes de commandes qui permettent de gérer indépendamment le débit de fluide de refroidissement dans les différentes branches du circuit de refroidissement d'un moteur, afin d'optimiser la température du moteur thermique et le chauffage de l'habitacle. Cependant, les vannes de commande n'apportent pas d'information sur l'état du circuit de refroidissement au système de pilotage de la vanne ou au calculateur du moteur et ne permettent pas de diagnostiquer les pannes ou les dysfonctionnements du circuit de refroidissement.

Il est en outre connu d'utiliser des capteurs externes à la vanne pour surveiller le fonctionnement du fluide caloporteur. Mais l'installation de tels capteurs est coûteuse, peu fiable et nécessite, en outre, d'avoir plusieurs connecteurs pour transmettre les valeurs mesurées au calculateur du véhicule et au système de pilotage de la vanne.

Les vannes de circuits de refroidissement actuelles ne sont donc pas équipées pour détecter un éventuel dysfonctionnement et le cas échéant pour en fournir un diagnostic qui permette d'ajuster le fonctionnement des vannes.

Les documents US 6185757 et JP 61062679 décrivent une vanne dans lequel un organe rotatif permet de distribuer le fluide circulant dans la vanne à travers ses différents orifices en fonction de sa position angulaire.

Cependant, ces vannes nécessitent des moteurs d'entraînement relativement puissants pour vaincre les frottements entre le corps de vanne et l'organe rotatif.

Il est connu du document DE 3 133 633 une vanne selon le préambule de la revendication 1.

L'invention vient améliorer la situation.

Elle propose à cet effet une vanne de commande, comportant des capteurs intégrés et destinée à un circuit de circulation de fluide qui, dans une forme de réalisation préférée de l'invention, constitue un circuit de refroidissement d'un moteur thermique de véhicule automobile et est munie de capteurs intégrés pour asservir la position de la vanne de commande en fonction d'au moins une grandeur caractéristique de l'état du circuit de refroidissement, mesurée par les capteurs, et pour diagnostiquer un dysfonctionnement du circuit de refroidissement.

Dans cette application particulière, l'invention vise à procurer une vanne qui permet de gérer indépendamment le débit du fluide de refroidissement dans les différentes branches du circuit de refroidissement du moteur, afin d'optimiser la température du moteur thermique et le chauffage de l'habitacle.

L'invention concerne ainsi plus particulièrement une vanne de commande pour un circuit de circulation de fluide, selon les caractéristiques de la revendication 1.

Ceci convient tout particulièrement lorsque une sortie de fluide possède une section importante et évite d'augmenter le diamètre du corps de vanne. Ceci est utile lorsque l'on veut isoler une branche choisie du circuit.

Dans une réalisation avantageuse, le corps délimite un logement cylindrique pour l'organe de réglage et la paroi latérale est une paroi cylindrique.

Il est possible ainsi de gérer le débit du fluide au travers des différentes sorties de la vanne, et cela en fonction de la position angulaire donnée à l'organe de réglage de la vanne.

De cette manière, il est possible de gérer la distribution du fluide selon une loi prédéfinie.

Une telle vanne peut ainsi équiper un circuit de circulation de fluide, et en particulier un circuit de refroidissement d'un moteur de véhicule automobile, pour gérer indépendamment les débits de fluide de refroidissement dans les différentes branches du circuit.

Avantageusement, l'extrémité tronquée comprend une face généralement plane qui forme avec l'axe de rotation un angle choisi voisin de 45 degrés.

Dans la vanne de l'invention, l'une au moins des sorties de fluide peut être une tubulure radiale ou encore une tubulure tangentielle.

Dans une application particulière, la vanne comprend trois sorties de fluide.

Dans une forme de réalisation de l'invention, l'organe de réglage est recouvert d'une bague fendue, rendue solidaire en rotation par un ergot en saillie que comporte l'organe de réglage.

En ce cas, la bague fendue est avantageusement faite d'un matériau à faible coefficient de frottement. Une telle bague fendue présente avantageusement un diamètre extérieur légèrement supérieur au diamètre intérieur du corps de vanne avant montage et un diamètre intérieur légèrement supérieur au diamètre de l'organe de réglage après montage.

Il est avantageux que la bague fendue recouvre une région de l'organe de réglage qui est munie de rainures circulaires. Ces rainures garantissent en effet le plaquage de la bague fendue contre la paroi intérieure du corps, en assurant ainsi une bonne étanchéité en fonctionnement.

En variante ou en complément, l'extrémité tronquée de l'organe de réglage peut comprendre un canal ayant une forme choisie, avantageusement en arc de cercle, ce qui permet d'optimiser la progressivité d'ouverture.

En variante ou en complément, l'organe de réglage peut être muni d'un patin d'étanchéité, de préférence monté sur ressort, ce qui permet d'obtenir l'étanchéité, notamment sur la branche du circuit qui est la plus critique.

La vanne de commande comprend avantageusement des moyens de motorisation propres à entraîner l'organe de réglage au moyen d'une roue d'entraînement faisant partie d'un réducteur pour l'amener dans des positions angulaires choisies par rapport au corps de vanne.

En complément, la vanne comprend un microprocesseur pour piloter les moyens de motorisation.

Selon un autre aspect de l'invention, l'organe de réglage comporte au moins un capteur interne pour mesurer des valeurs relatives au fonctionnement du circuit de circulation de fluide.

Dans une première forme de réalisation, les capteurs internes sont des capteurs de présence d'air dans le circuit.

Dans une application particulière, l'organe de réglage comporte un canal creusé, se prolongeant sur toute la longueur de l'organe de réglage, pour loger les capteurs.

Avantageusement, une première extrémité des capteurs traverse l'extrémité inférieure de l'organe de réglage tournée vers la paroi de fond, en un endroit choisi, pour être en contact avec le fluide.

Dans une deuxième forme de réalisation, les capteurs sont des capteurs de température et le canal creusé comporte une extrémité inférieure en laiton, en contact avec le fluide pour y loger la première extrémité des capteurs de température.

Il est avantageux que la deuxième extrémité des capteurs traverse l'extrémité supérieure de la vanne vers l'extérieur pour transmettre les valeurs mesurées par les capteurs.

En complément, la deuxième extrémité des capteurs est connectée à des moyens de transmission d'informations pour transmettre les valeurs mesurées par les capteurs au microprocesseur et/ou à un calculateur.

Dans une forme de réalisation, les moyens de transmission d'informations comportent des pistes circulaires à contact électrique situées.

Dans cette forme de réalisation, les moyens de transmission d'informations peuvent comporter également des fiches, reliées aux pistes circulaires pour transmettre les valeurs provenant des capteurs.

Les pistes circulaires peuvent être situées sur une partie mobile de la vanne tandis que les fiches sont situées sur une partie fixe de la vanne.

En variante, les pistes circulaires peuvent être situées sur une partie fixe de la vanne tandis que les fiches sont situées sur une partie mobile de la vanne.

En particulier, la partie mobile de la vanne est la roue d'entraînement des moyens de motorisation.

La vanne de commande comprend avantageusement un connecteur, relié aux moyens de transmission d'informations de la vanne, pour transmettre les valeurs mesurées au microprocesseur et/ou au calculateur.

Selon un autre aspect, l'invention concerne un circuit de circulation de fluide, lequel comprend une vanne de commande comme définie précédemment, dont l'entrée de fluide est reliée à une source de fluide et dont les sorties de fluide sont reliées respectivement à des branches du circuit.

Dans une application préférentielle, le circuit est réalisé sous la forme d'un circuit de refroidissement d'un moteur thermique de véhicule automobile qui est parcouru par un fluide de refroidissement sous l'action d'une pompe de circulation. Dans cette application, la vanne de commande est une vanne à trois voies, dont l'entrée de fluide est reliée à une arrivée de fluide de refroidissement en provenance du moteur, et dont les trois sorties de fluide sont reliées respectivement à une première branche du circuit qui contient un radiateur de refroidissement, à une deuxième branche du circuit qui constitue une dérivation du radiateur de refroidissement et à une troisième branche du circuit qui contient un aérotherme pour le chauffage de l'habitacle.

Dans la description qui suit, faite seulement à titre d'exemple, on se réfère aux dessins annexés, sur lesquels :
- la Figure 1 est une vue en perspective d'une vanne de commande, du type à trois voies, selon une première forme de réalisation;
- la Figure 2 est une vue de dessus de la vanne de la Figure 1;
- les Figures 3 et 4 sont des vues latérales de la vanne des Figures 1 et 2;
- la Figure 5 est une vue en coupe selon la ligne V-V de la Figure 3;
- les Figures 6 à 8 sont des vues en coupe prises respectivement selon les lignes VI-VI, VII-VII et VIII-VIII de la Figure 4;
- la Figure 9 est une vue en perspective d'un organe de réglage d'une vanne de commande, selon une autre forme de réalisation, qui est munie d'un canal;
- les Figures 10 et 11 sont deux vues de côté de l'organe tournant de la Figure 9;
- les Figures 12 à 15 sont des vues en coupe, correspondant respectivement aux Figures 5 à 8, pour une vanne de commande équipée d'un organe tournant selon les Figures 9 à 11;
- la Figure 16 est une vue en perspective d'un organe de réglage équipé d'un patin d'étanchéité;
- la Figure 17 est une vue de côté de l'organe de réglage de la Figure 16;
- la Figure 18 est une vue en coupe selon la ligne XVIII-XVIII de la Figure 17;
- les Figures 19 à 22 sont différentes vues en coupe, correspondant respectivement aux Figures 5 à 8, d'une vanne de commande équipée d'un organe de réglage selon les Figures 16 à 18;
- les Figures 23 à 30 sont différentes vues, analogues respectivement aux figures 1 à 9, d'une vanne de commande selon une autre forme de réalisation;
- la Figure 31 est une vue en perspective d'un organe de réglage équipé d'une bague fendue;
- la Figure 32 est une vue de côté correspondant à la Figure 31;
- la Figure 33 est une vue en coupe selon la ligne XXXIII-XXXIII de la Figure 32;
- la Figure 34 montre à chaque fois trois vues en coupe différentes de la vanne pour des positions angulaires de l'organe de réglage, numérotées de 1 à 21, qui se suivent par incréments de 15 degrés dans le sens horaire;
- la Figure 35 représente un circuit de refroidissement d'un moteur thermique de véhicule automobile équipé d'une vanne de commande ou régulation selon l'invention;
- la Figure 36 est une vue en perspective d'une vanne de commande, du type à trois voies, selon une forme de réalisation de l'invention;
- la Figure 37 est une vue latérale de la vanne de la Figure 36;
- les Figures 38, 39 et 40 sont des vues en coupe radiale de la vanne des Figures 36 et 37, passant respectivement par les axes des trois tubulures de sortie;
- les Figures 41, 42 et 43 sont des vues coupe respectivement selon les lignes XLI - XLI, XLII - XLII et XLIII - XLIII de la Figure 37;
- la Figure 44 est une vue latérale de l'organe de réglage de la vanne des Figures 36 à 43;
- la Figure 45 est une vue en perspective de l'organe de réglage de la Figure 44;
- Les Figures 46 et 47 sont des vues analogues aux Figures 44 et 45, respectivement, l'organe de réglage étant équipé d'une bague fendue;
- la Figure 48 montre à chaque fois trois vues en coupe différentes de la vanne des Figures 36 à 43 pour des positions angulaires de l'organe de réglage, numérotées de 1 à 36, qui se suivent par incréments de 10 degrés dans le sens horaire;
- les Figures 49 et 50 représentent une vanne de commande à capteurs intégrés; et
- la Figure 51 représente une roue d'entraînement comportant des pistes circulaires à contact électrique.

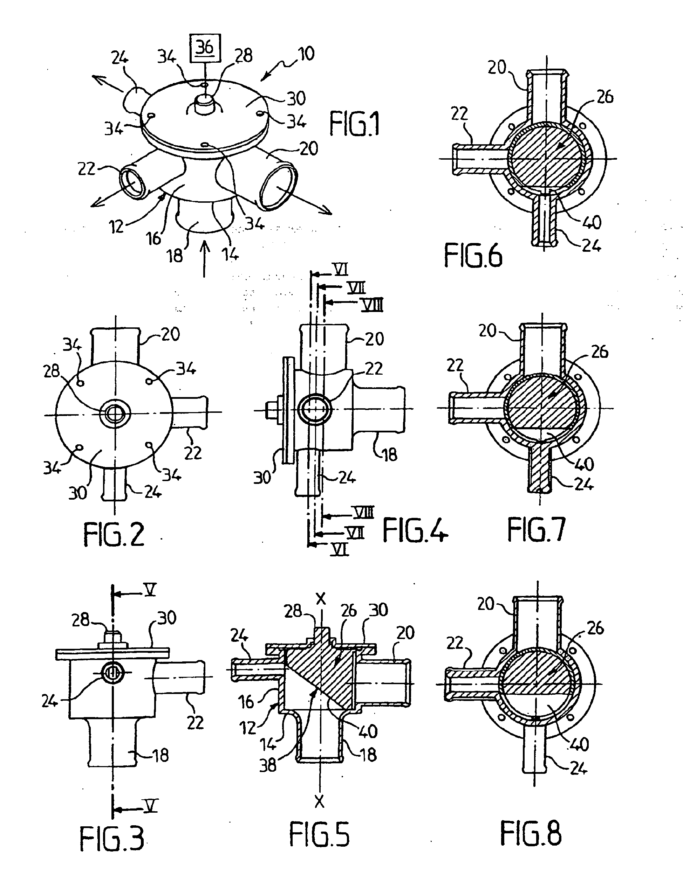

On se réfère d'abord aux Figures 1 à 8 qui montrent une vanne de commande 10 selon une première forme de réalisation. Cette vanne de commande comprend un corps cylindrique 12 limité par une paroi de fond 14 et une paroi cylindrique latérale cylindrique 16 d'axe XX. Dans la paroi de fond 14, débouche axialement une tubulure 18 d'entrée de fluide. Dans la paroi latérale cylindrique 16, débouchent trois tubulures de sortie de fluide 20, 22 et 24. Ces trois tubulures de sortie débouchent à des hauteurs axiales et en des positions angulaires choisies par rapport à l'axe de rotation XX. Dans l'exemple, les tubulures 20, 22 et 24 débouchent radialement dans la paroi 16. Les tubulures 20 et 24 sont diamétralement opposées, tandis que la tubulure 22 forme un angle de 90 degrés par rapport à l'axe commun des tubulures 20 et 24. Par ailleurs, les tubulures 20, 22 et 24 ont des diamètres successivement décroissants.

A l'intérieur du corps de vanne 12, est logé un organe de réglage 26, encore appelé organe tournant, qui est réalisé sous la forme d'un élément cylindrique plein, qui peut être en plastique. Le diamètre de l'élément cylindrique correspond sensiblement au diamètre interne du corps de vanne. L'organe de réglage 26 se prolonge par une tige 28 dirigée suivant l'axe XX. Cette tige 28 passe au travers d'une ouverture centrale que comporte un couvercle 30 de forme circulaire qui est vissé sur une collerette 32 du corps de vanne par l'intermédiaire de quatre vis de fixation 34, avec interposition d'un joint d'étanchéité (non représenté). L'organe de réglage 26 est propre à être entraîné en rotation autour de l'axe XX par des moyens de motorisation 36 représentés schématiquement sur la Figure 1. Ces moyens de motorisation peuvent être constitués, par exemple, par un moteur du type pas à pas susceptible d'amener l'organe de réglage 26 dans une multiplicité de positions différentes, soit par incréments successifs, soit de manière continue.

L'organe de réglage 26 comprend une extrémité tronquée 38 qui est tournée du côté de la paroi de fond 14 (comme on le voit le mieux sur la Figure 5). Dans l'exemple, cette extrémité tronquée est formée par une face généralement plane 40 qui forme, avec l'axe de rotation XX, un angle choisi qui, dans l'exemple, est voisin de 45 degrés.

De la sorte, l'organe de réglage 26 permet de contrôler les sorties de fluide 20, 22 et 24 avec une loi définie en fonction de la position angulaire du dit organe dans le corps de vanne.

Dans la position représentée aux Figures 5 à 8, le fluide qui arrive par la tubulure d'entrée 18 ne peut s'échapper que par la tubulure de sortie 24, les autres tubulures de sortie 20 et 22 étant fermées.

En modifiant ensuite la position angulaire de l'organe de réglage, on peut ajuster le débit de fluide au travers des différentes tubulures de sortie 20, 22 et 24, et cela de manière progressive.

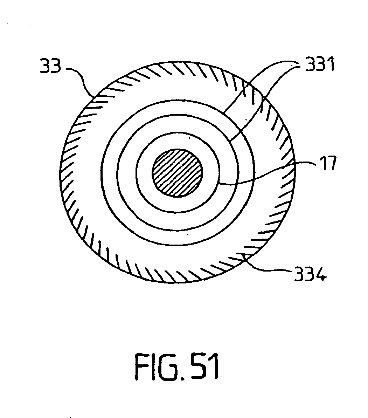

La position de l'organe de réglage 26 est contrôlée au moyen d'un capteur de position 331 placé, par exemple, sur la roue d'entraînement 33 du réducteur 3 des moyens de motorisation 36 (Figure 51). Ce capteur 331 peut-être un potentiomètre à piste circulaire de contact directement fixé sur la roue d'entraînement 33.

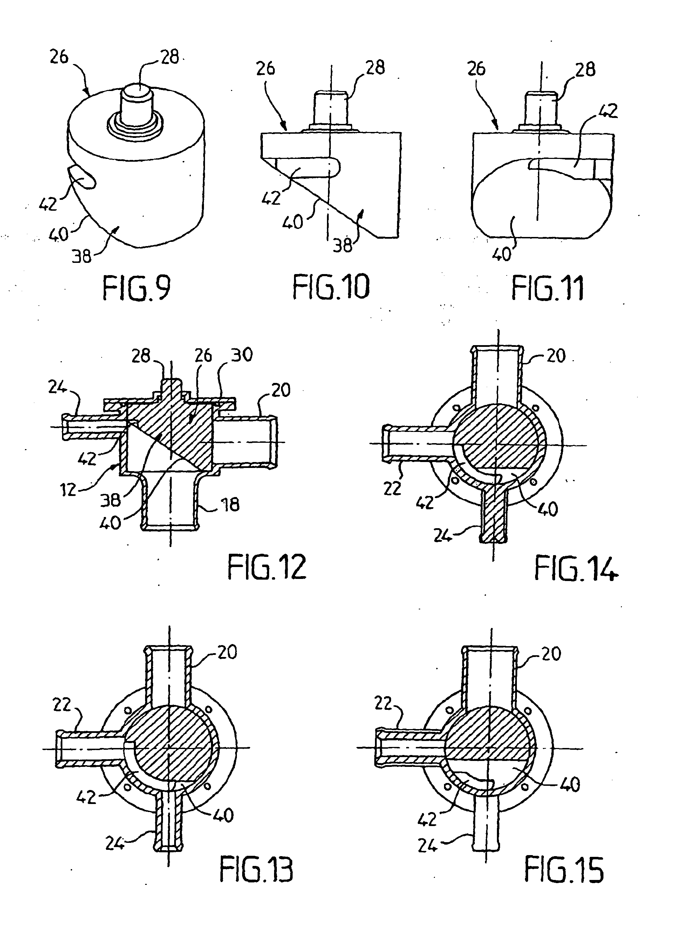

L'organe de réglage 26 représenté aux Figures 9 à 11, est semblable à celui de la forme de réalisation précédente, sauf que l'extrémité tronquée 38 comprend un canal 42 de forme choisie qui, ici, a sensiblement une forme en arc de cercle centré autour de l'axe XX. Ce canal en arc de cercle s'étend sur sensiblement 90 degrés, comme on peut le voir sur les Figures 12 à 15, lesquelles correspondent respectivement aux Figures 5 à 8 de la forme de réalisation précédente.

La présence de ce canal permet de réaliser une progressivité d'ouverture de la vanne sur deux voies de cette dernière, à savoir sur les tubulures de sortie 22 et 24.

La position de l'organe de réglage 26 des Figures 12 à 15 correspond à celle de l'organe de réglage 26 des Figures 5 à 8. Cependant, la présence de ce canal fait qu'un léger débit de fluide peut s'échapper par la tubulure de sortie 22, alors que cette tubulure de sortie est complètement fermée dans le cas de la forme de réalisation précédente. Par contre, là encore, la tubulure de sortie 20 est fermée par l'organe de réglage 26.

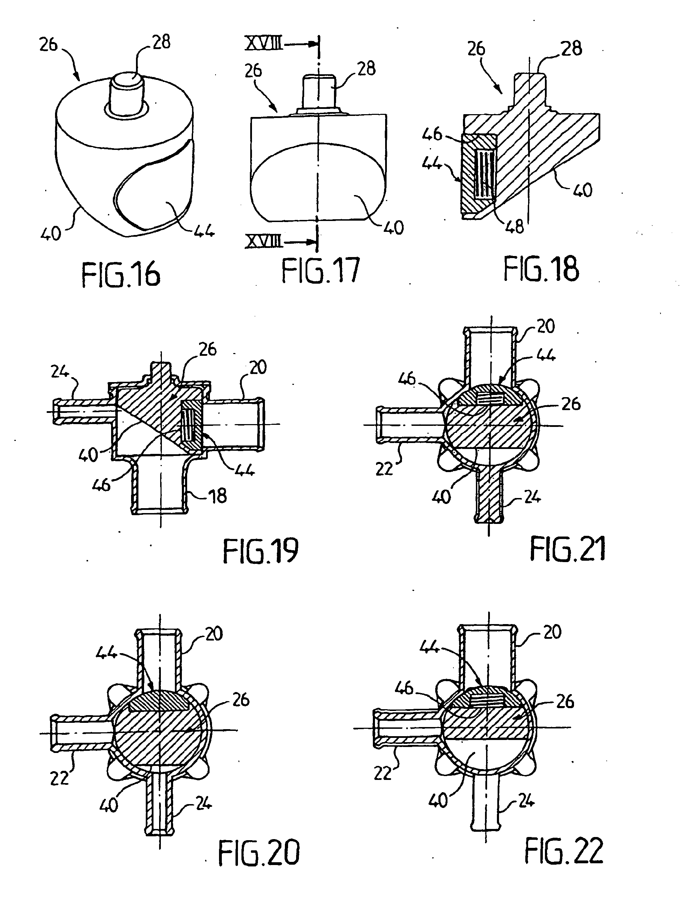

On se réfère maintenant aux Figures 16 à 18 qui montrent un organe de réglage 26 analogue à celui de la forme de réalisation des Figures 1 à 8. La principale différence réside dans le fait que cet organe est ici muni d'un patin d'étanchéité 44 de forme cylindrique, reçu dans un logement 46 ménagé à la périphérie de l'organe tournant et sollicité par un ressort 48. Ce patin permet d'assurer une étanchéité au niveau le plus critique du circuit. La présence du ressort permet de compenser les variations de dilatation des matériaux, en raison des variations de température du fluide qui traverse la vanne.

Sur les Figures 19 à 22, qui s'apparentent respectivement aux Figures 5 à 8, le patin d'étanchéité 44 assure, dans la position représentée, l'étanchéité avec la tubulure 20.

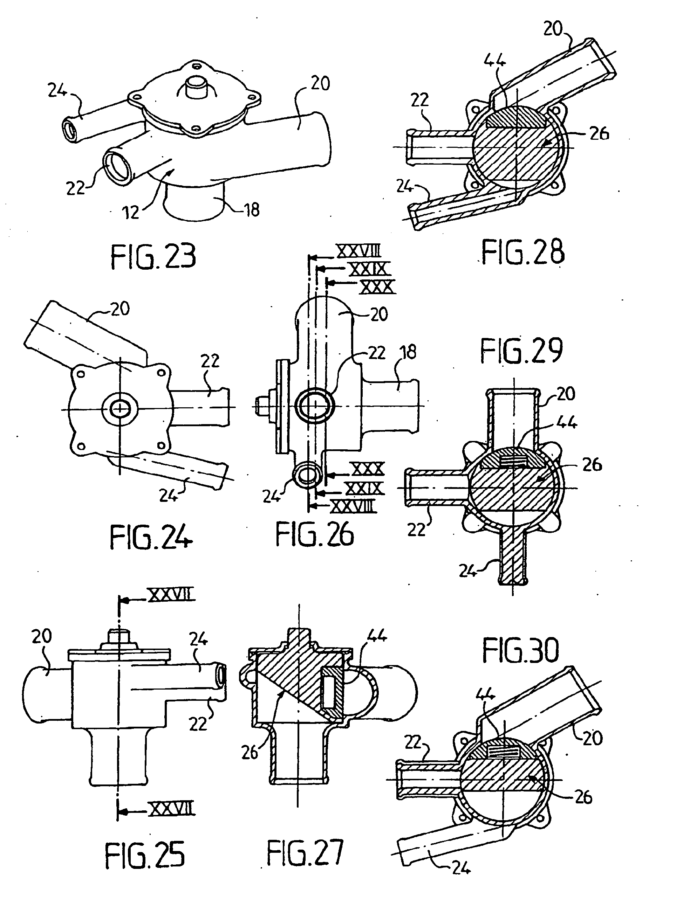

On se réfère maintenant aux Figures 23 à 30 qui s'apparentent respectivement aux Figures 1 à 8, l'organe de réglage 26 étant ici muni d'un patin 44 comme dans la forme de réalisation précédente. La différence principale réside ici dans le fait que les tubulures 20 et 24 débouchent tangentiellement dans le corps de vanne 12, tandis que la tubulure 22 débouche radialement dans ce dernier.

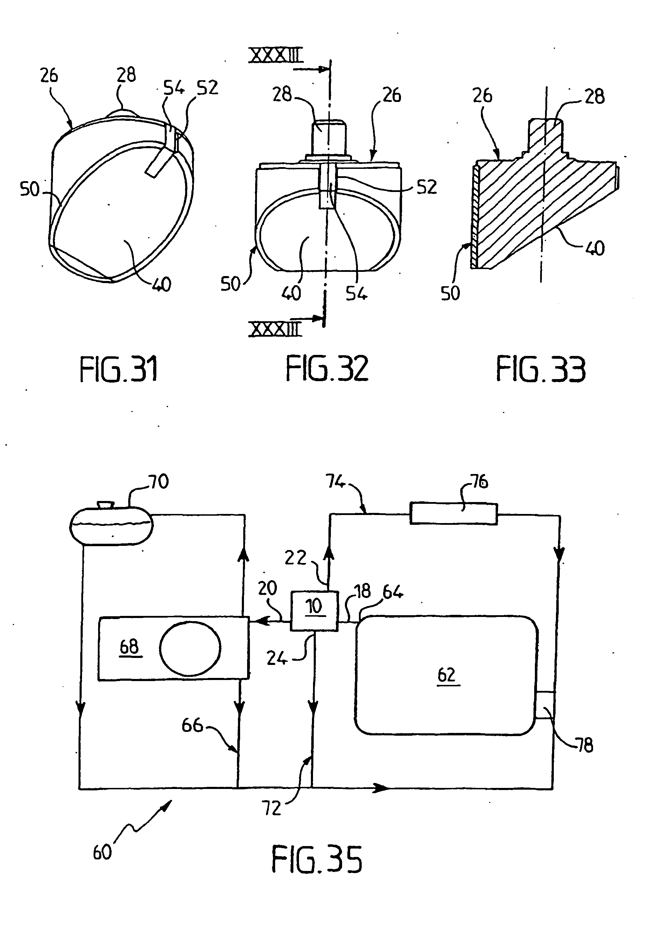

On se réfère maintenant aux Figures 31 à 33 qui montrent un organe de réglage analogue à celui des Figures 1 à 8. L'organe de réglage est ici recouvert d'une bague fendue 50 qui comprend une fente 52 pour laisser passage à un ergot 54 formé radialement en saillie sur l'organe de réglage. Il en résulte que cette bague fendue est solidaire en rotation de l'organe de réglage 26. La bague fendue 50 est faite d'un matériau à faible coefficient de frottement, par exemple en Téflon ® (polytétrafluoréthylène, en PPA ou en PPS, avec ou sans revêtement de surface.

En outre, cette bague fendue présente un diamètre extérieur légèrement supérieur au diamètre intérieur du corps de vanne avant montage et un diamètre intérieur légèrement supérieur au diamètre de l'organe de réglage après montage. Ceci permet de garantir un contact étanche de la bague sur le corps, et cela sans entraîner un couple trop élevé.

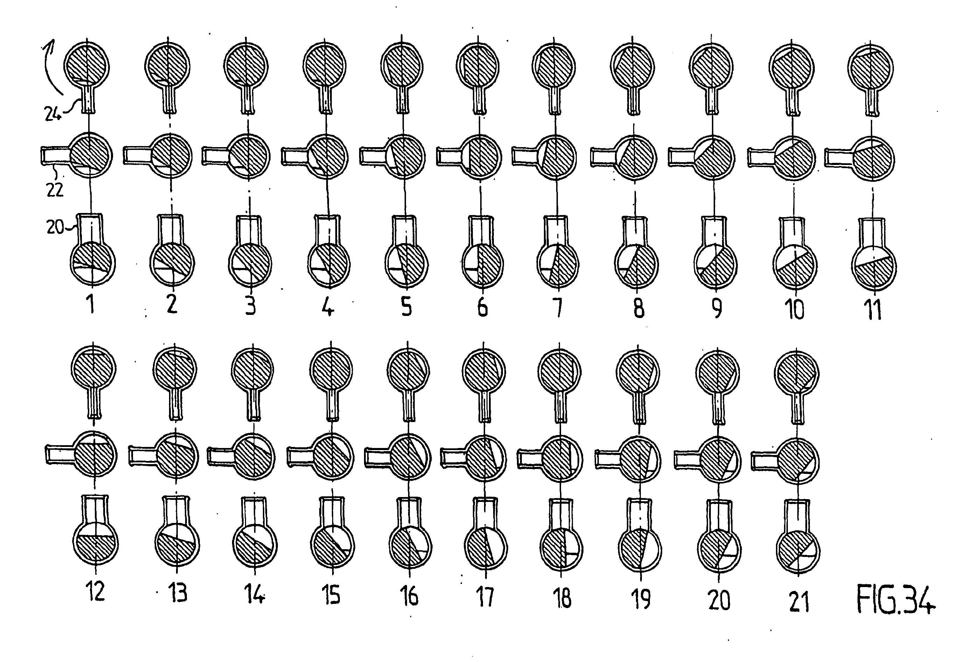

On se réfère maintenant à la Figure 34 qui montre différentes positions successives de l'organe de réglage, numérotées de 1 à 21, à chaque fois respectivement au niveau des trois tubulures de sortie 20, 22 et 24. Dans l'exemple, ces positions sont obtenues par des rotations successives de 15 degrés, dans le sens horaire, de l'organe de réglage à l'intérieur du corps de vanne. On constate ainsi que les différentes tubulures de sortie peuvent être ouvertes ou fermées avec une loi définie, et de manière progressive.

Ces différentes positions sont obtenues par les moyens de motorisation 36 qui sont pilotés par un circuit de commande approprié.

On se réfère maintenant à la Figure 35 qui montre un circuit 60 pour le refroidissement d'un moteur thermique 62 de véhicule automobile. Le circuit 60 est parcouru par un fluide de refroidissement, typiquement de l'eau additionnée d'un antigel, qui circule sous l'action d'une pompe 78. Le fluide est chauffé par le moteur, quitte ce dernier par une sortie 64 qui est reliée à la tubulure d'entrée 18 d'une vanne de commande 10 du type décrit précédemment. Cette vanne comprend trois tubulures de sortie 20, 22 et 24 qui sont reliées à trois branches du circuit. Ce circuit comprend une première branche 66 qui contient un radiateur de refroidissement 68 et un vase d'expansion 70, une branche 72 qui forme une dérivation du radiateur de refroidissement 68 et une branche 74 qui contient un aérotherme 76 servant au chauffage de l'habitacle du véhicule. La tubulure 20 est reliée à la branche 66 (radiateur), la tubulure 22 à la branche 74 (aérotherme) et la tubulure 24 à la branche 72 (dérivation).

La vanne permet ainsi de gérer indépendamment les débits de fluide dans les branches précitées, afin d'optimiser la température du moteur thermique et le chauffage de l'habitacle.

En particulier, lors du démarrage à froid du moteur, elle permet de faire circuler le fluide dans la branche de dérivation 72 sans passer par le radiateur 68. Pendant cette phase de démarrage, il est possible aussi de faire passer une partie ou la totalité du débit de fluide dans l'aérotherme 76, si un chauffage est désiré.

Lorsque la température du fluide a atteint ou dépassé un seuil donné, le fluide passe par le radiateur 68 et contourne la dérivation 72. En outre, selon ou non qu'un chauffage soit désiré, une partie du fluide peut ou non passer par l'aérotherme 76.

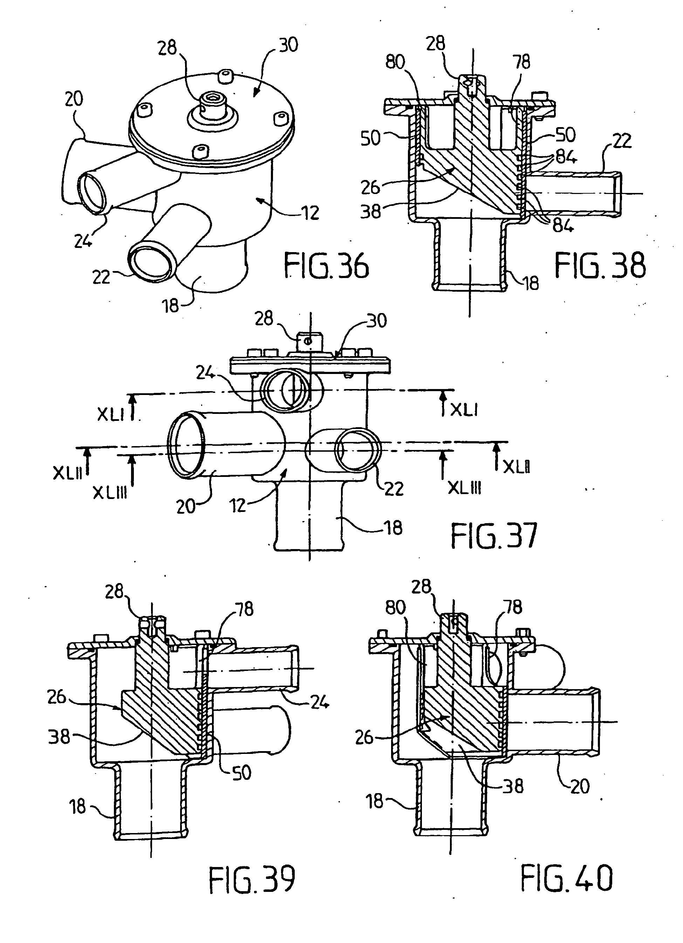

La vanne de commande des figures 36 à 47 et selon l'invention s'apparente à celles décrites précédemment, les éléments communs étant désignés par les mêmes références numériques.

Les tubulures de sortie 20 et 22 forment entre elles un angle voisin de 90', tandis que la tubulure de sortie 24 s'étend entre les tubulures 20 et 22. De plus, la tubulure de sortie 24, qui est la plus proche du couvercle 30, possède un diamètre supérieur à celui des formes de réalisation précédentes. De ce fait, il faudrait normalement augmenter le diamètre du corps de vanne. Pour éviter cela l'organe de réglage 26 comprend, à l'opposé de l'extrémité tronquée 38, deux portions de paroi cylindrique 78 et 80 sensiblement opposés diamétralement pour contrôler la tubulure de sortie 24.

Ces deux portions de paroi 78 et 80 prolongent l'organe de réglage 26 en direction opposée à celle de l'extrémité tronquée 38 et elles sont réalisées sous la forme de deux voiles de matière qui s'étendent à distance de la tige 28 de l'organe de réglage. On voit, en particulier sur les figures 39 à 41, comment ces deux portions de paroi permettent de fermer ou d'ouvrir l'accès à la tubulure de sortie 24 en fonction de la position angulaire de l'organe de réglage.

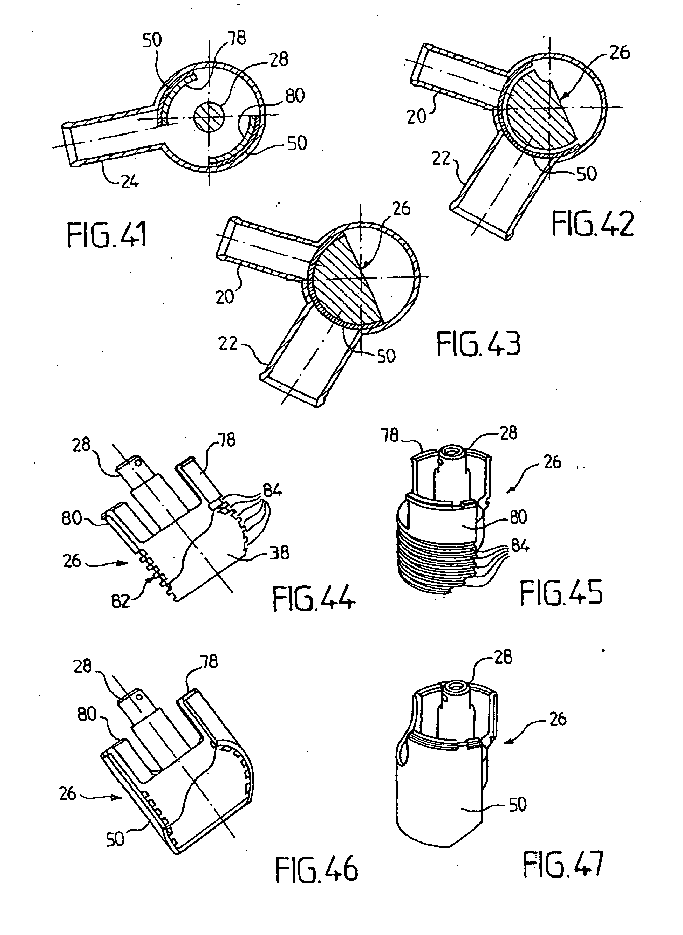

Dans cette forme de réalisation, l'organe de réglage 26 comprend une région périphérique 82 qui est munie de rainures circulaires 84 (voir notamment les Figures 44 et 45). Comme dans les formes de réalisation précédentes, l'organe de réglage 26 reçoit une bague fendue 50. Cette dernière recouvre à la fois la région périphérique 82 et les deux portions de paroi 78 et 80. La fonction de ces rainures circulaires 84 est de plaquer la bague fendue 50 contre la paroi intérieure du corps de vanne par différence de pression, ce qui permet d'assurer une bonne étanchéité en fonctionnement.

La vanne des Figures 36 à 47 trouve une utilisation particulière dans un circuit du type représenté à la Figure 35. En ce cas, la tubulure 20 est reliée à la branche 66 (radiateur), la tubulure 22 à la branche 74 (aérotherme) et la tubulure 24 à la branche 72 (dérivation).

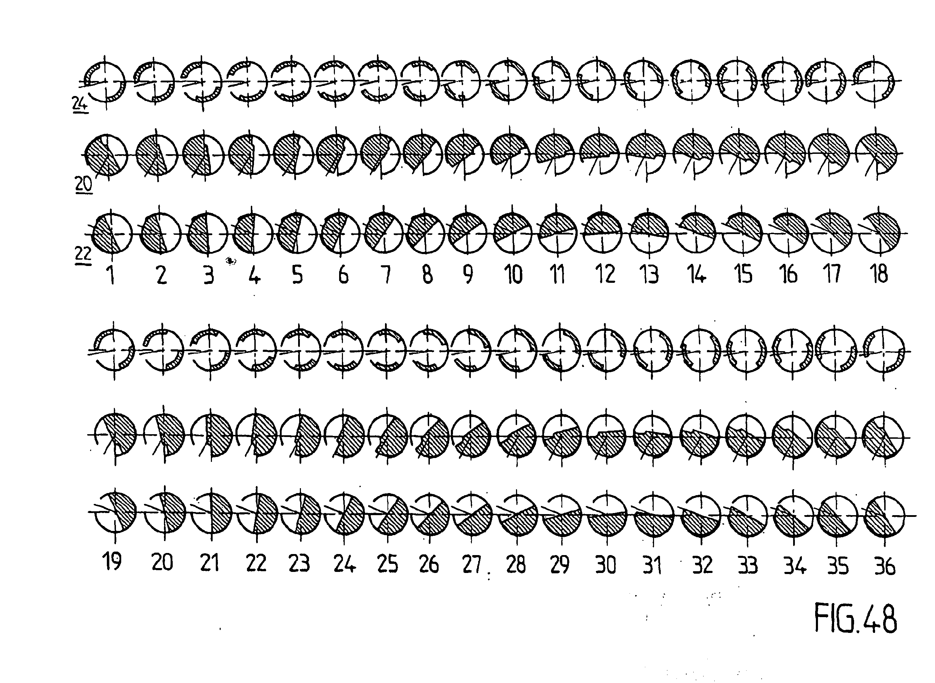

On se réfère maintenant à la Figure 48 qui montre différentes positions successives de l'organe de réglage, numérotées de 1 à 36, à chaque fois respectivement au niveau des trois tubulures de sortie 20, 22 et 24. Dans l'exemple, ces positions sont obtenues par des rotations successives de 10 degrés, dans le sens horaire, de l'organe de réglage à l'intérieur du corps de vanne. On constate ainsi que les différentes tubulures de sortie peuvent être ouvertes ou fermées avec une loi définie, et de manière progressive.

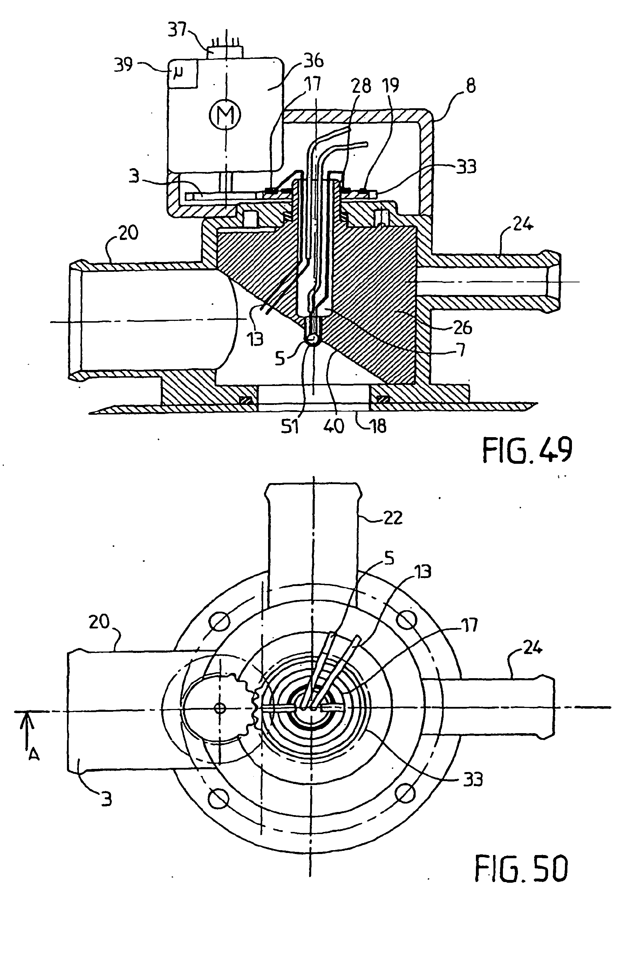

En référence aux figures 49 et 50, il est possible d'intégrer des capteurs à la vanne de commande. La vanne de commande permet en effet d'intégrer des capteurs directement dans l'organe de réglage 26 en rotation autour de l'axe XX. On peut placer dans l'organe de réglage 26 toute sorte de capteurs capables de mesurer des valeurs relatives au circuit de refroidissement du moteur, par exemple :
- un capteur de température liquide de refroidissement,
- un capteur de température d'un composant à risque sur l'actionneur de la vanne,
- un capteur de pression du circuit de refroidissement pour anticiper toute surchauffe du moteur et pour déclencher un mode dégradé pour la vanne, le ventilateur et la pompe puis le moteur si nécessaire,
- un capteur de présence d'air dans le liquide de refroidissement, etc.

La figure 49 illustre l'intégration de capteurs dans un organe de réglage à extrémité tronquée 38. Un capteur de température de liquide de refroidissement 5 et un capteur de présence d'air dans le liquide de refroidissement 13 sont intégrés dans l'organe de réglage 26. Ces capteurs sont composés de deux électrodes. Un canal cylindrique 7 est creusé dans l'organe de réglage 26 pour loger les capteurs 13 et 5.

Le canal cylindrique 7 comporte une extrémité en laiton 51 en contact avec le liquide de refroidissement, quelle que soit la position de l'organe de réglage. Le capteur de température 5 est introduit dans le canal cylindrique de manière que son extrémité inférieure soit logée dans l'extrémité en laiton. Ainsi le capteur de température peut mesurer la température du liquide de refroidissement, même lorsque l'organe de réglage est en rotation autour de l'axe XX.

Il existe plusieurs variantes de réalisations pour intégrer les capteurs. L'organe de réglage 26 est conformé pour pouvoir loger les capteurs, en tenant compte notamment de la nature du capteur et de sa forme. L'intégration des capteurs 5 et 13 est présentée à titre d'exemple non limitatif. D'autres formes d'intégration sont possibles.

Par exemple, le capteur de présence d'air dans le liquide de refroidissement 13 comporte une première partie introduite dans le canal cylindrique tandis que son extrémité inférieure traverse l'organe de réglage 26 jusqu'à son extrémité tronquée 28, à l'extérieur du canal cylindrique, pour être en contact avec le liquide de refroidissement.

Dans toutes les variantes de réalisation, les extrémités inférieures des capteurs traversent l'extrémité inférieure de l'organe de réglage 26 qui est tournée vers la paroi de fond 14. De cette façon, le capteur 13 peut-être également en contact avec le liquide de refroidissement indépendamment de la position angulaire de l'organe de réglage. Il peut alors mesurer des valeurs relatives à la présence d'air dans le liquide de refroidissement.

Les valeurs mesurées par les capteurs sont ensuite transmises vers l'extérieur de la vanne pour un traitement destiné à assurer la surveillance du circuit de refroidissement et le diagnostic des éventuels dysfonctionnements.

On se réfère maintenant à la figure 50, qui est une vue de dessus de la vanne représentée à la figure 49. Dans cette figure, la roue d'entraînement 33 du réducteur 3 comporte des pistes circulaires 17. Les pistes circulaires sont donc également mobiles. En variante, les pistes circulaires peuvent être agencées sur une autre partie mobile de la vanne distincte de la roue d'entraînement, par exemple sur un circuit imprimé monté en parallèle à la roue d'entraînement.

Avantageusement, les extrémités supérieures des capteurs sont reliées à ces pistes circulaires par contact électrique pour permettre le mouvement relatif de l'organe de réglage par rapport au corps de vanne 12 et éviter la torsion des fils. Cette liaison permet aux capteurs de transmettre les valeurs mesurées aux pistes circulaires.

Les pistes circulaires sont reliées à des fiches de type balais 19, placées sur une partie fixe de la vanne, par exemple sur le circuit imprimé recevant le microprocesseur 39 qui pilote la vanne ou sur le boîtier de protection 8 des composants extérieurs de la vanne tel que le réducteur 3 ou la roue d'entraînement 33. Ces fiches transmettent les informations reçues des pistes circulaires à un connecteur unique 37. Compte tenu du regroupement des extrémités supérieures des capteurs, il n'est plus utile, en effet, d'utiliser de nombreux connecteurs pour acheminer les valeurs mesurées vers le microprocesseur et/ ou vers le calculateur.

Le connecteur 37 transmet alors les informations relatives aux valeurs mesurées par les capteurs au microprocesseur qui pilote la vanne (alimentation, signal de pilotage et diagnostic) et/ou au calculateur du véhicule en lui fournissant des données nécessaires à la cartographie du moteur telles que la température du liquide.

En variante, on peut choisir de placer les pistes circulaires 17 sur une des parties fixes de la vanne et les fiches 19 sur une des parties mobiles de la vanne.

Par ailleurs, les pistes circulaires peuvent être remplacées par d'autres moyens de transmissions d'information capables de transférer des données des extrémités supérieures des capteurs vers le connecteur, comme par exemple des capteurs sans contact, notamment à effet de hall, optique ou magnéto-résistif.

L'intégration de capteurs à l'intérieur de la vanne, selon l'invention, permet de surveiller le fonctionnement du circuit de refroidissement et de diagnostiquer des pannes, le cas échéant. En mode dégradé, elle permet en outre d'ajuster le fonctionnement de la vanne. La vanne peut ainsi réguler à elle seule la température du moteur et diagnostiquer toutes pannes d'actionneurs (ventilateur, pompe, vanne, fuite de liquide, etc) auprès du calculateur avant la surchauffe du moteur.

L'intégration des capteurs à la vanne de commande selon l'invention garantit une meilleure prévention et sûreté de fonctionnement du moteur. Par ailleurs, elle permet de diminuer le nombre de pièces et le coût de la fonction de régulation du circuit de refroidissement.

## Revendications

1. Vanne de commande pour un circuit de circulation de fluide, comprenant :
- un corps (12) qui est muni d'au moins une entrée de fluide (18) et d'au moins deux sorties de fluide (20, 22, 24) et qui délimite un logement pour un organe de réglage (26) propre à tourner autour d'un axe de rotation (XX) et à prendre différentes positions angulaires pour contrôler la distribution du fluide au travers des sorties, ledit corps (12) comprenant une paroi latérale (16) dans laquelle débouchent les sorties de fluide (20, 22, 24) à des hauteurs axiales et en des positions angulaires choisies par rapport à l'axe de rotation (XX), et
- l'organe de réglage comprenant une extrémité tronquée (38) tournée vers la paroi de fond (14) dudit corps (12), ladite extrémité tronquée définissant une partie conformée dudit organe de réglage pour réaliser le contrôle des sorties de fluide avec une loi définie en fonction de la position angulaire de l'organe tournant dans le corps de vanne (12), **caractérisée en ce que** ledit corps (12) comprend une paroi de fond (14) dans laquelle débouche l'entrée de fluide (18) et **en ce que**
- l'organe de réglage (26) comprend, à l'opposé de l'extrémité tronquée (38), deux portions de paroi cylindrique (78, 80) sensiblement opposées diamétralement pour contrôler l'une (24) des sorties de fluide.

2. Vanne de commande selon la revendication 1, **caractérisée en ce que** le corps (12) délimite un logement cylindrique pour l'organe de réglage (26), **en ce que** la paroi latérale (16) est une paroi cylindrique et **en ce que** l'extrémité tronquée (38) comprend une face généralement plane (40) qui forme avec l'axe de rotation (XX) un angle choisi (A).

3. Vanne de commande selon la revendication 2, **caractérisée en ce que** ledit angle choisi est voisin de 45 degrés.

4. Vanne de commande selon l'une des revendications 2 et 3, **caractérisée en ce que** l'une au moins des sorties de fluide (20, 22, 24) est une tubulure radiale.

5. Vanne de commande selon l'une des revendications 2 et 3, **caractérisée en ce que** l'une au moins des sorties de fluide (20, 22, 24) est une tubulure tangentielle.

6. Vanne de commande selon l'une des revendications 1 à 5, **caractérisée en ce qu'**elle comprend trois sorties de fluide (20, 22, 24).

7. Vanne de commande selon l'une des revendications 1 à 6, **caractérisée en ce que** l'organe de réglage (26) est recouvert d'une bague fendue (50) rendue solidaire en rotation par un ergot (54) en saillie que comporte l'organe de réglage.

8. Vanne de commande selon la revendication 7, **caractérisée en ce que** la bague fendue (50) est faite d'un matériau à faible coefficient de frottement.

9. Vanne de commande selon l'une des revendications 7 et 8, **caractérisée en ce que** la bague fendue (50) présente un diamètre extérieur légèrement supérieur au diamètre intérieur du corps de vanne (12) avant montage et un diamètre intérieur légèrement supérieur au diamètre de l'organe de réglage (26) après montage.

10. Vanne de commande selon l'une des revendications 7 à 9, **caractérisée en ce que** la bague fendue (50) recouvre une région (82) de l'organe de réglage qui est munie de rainures circulaires (84).

11. Vanne de commande selon l'une des revendications 1 à 10, **caractérisée en ce que** l'extrémité tronquée (38) de l'organe de réglage (26) comprend un canal (42) ayant une forme choisie, avantageusement en arc de cercle.

12. Vanne de commande selon l'une des revendications 1 à 11, **caractérisée en ce que** l'organe de réglage (26) est muni d'un patin d'étanchéité (44).

13. Vanne de commande selon la revendication 12, **caractérisée en ce que** le patin d'étanchéité (44) est monté sur ressort (48).

14. Vanne de commande selon l'une des revendications 1 à 13, **caractérisée en ce qu'**elle comprend des moyens de motorisation (36) propres à entraîner l'organe de réglage (26) au moyen d'une roue d'entraînement (33) faisant partie d'un réducteur (3) pour l'amener dans des positions angulaires choisies par rapport au corps de vanne (12).

15. Vanne de commande selon la revendication 14, **caractérisée en ce que** la vanne comprend un microprocesseur (39) pour piloter les moyens de motorisation (36).

16. Vanne de commande selon l'une des revendications précédentes, **caractérisée en ce que** l'organe de réglage (26) comporte au moins un capteur interne (5, 13) pour mesurer des valeurs relatives au fonctionnement du circuit de circulation de fluide.

17. Vanne de commande selon la revendication 16, **caractérisée en ce que** les capteurs internes sont des capteur de présence d'air (13) dans le.circuit.

18. Vanne de commande selon la revendication 16, **caractérisée en ce que** l'organe de réglage (26) comporte un canal creusé (7), se prolongeant sur toute la longueur de l'organe de réglage (26), pour loger les capteurs (5, 13).

19. Vanne de commande selon la revendication 16, **caractérisée en ce qu'**une première extrémité des capteurs (5, 13) traverse l'extrémité inférieure de l'organe de réglage (26) tournée vers la paroi de fond (14), en un endroit choisi, pour être en contact avec le fluide et effectuer des mesures.

20. Vanne de commande selon la revendication 19, **caractérisée en ce que** les capteurs sont des capteurs de températures (5) et **en ce que** le canal creusé comporte une extrémité inférieure en laiton, en contact avec le fluide pour y loger la première extrémité des capteurs (5).

21. Vanne de commande selon la revendication 19, **caractérisée en ce que** la deuxième extrémité des capteurs (5, 13) traverse l'extrémité supérieure de la vanne (28) vers l'extérieur pour transmettre les valeurs mesurées par les capteurs.

22. Vanne de commande selon la revendication 21, **caractérisée en ce que** la deuxième extrémité des capteurs est connectée à des moyens de transmission d'informations pour transmettre les valeurs mesurées par les capteurs au microprocesseur (39) et/ou à un calculateur.

23. Vanne de commande selon la revendication 22, **caractérisée en ce que** les moyens de transmission d'informations comportent des pistes circulaires (17) à contact électrique.

24. Vanne de commande selon la revendication 23, **caractérisée en ce que** les moyens de transmission d'informations comportent des fiches reliées aux pistes circulaires (17) pour transmettre les valeurs provenant des capteurs.

25. Vanne de commande selon la revendication 24, **caractérisée en ce que** les pistes circulaires (17) sont situées sur une partie mobile de la vanne et **en ce que** les fiches sont situées sur une partie fixe de la vanne.

26. Vanne de commande selon la revendication 24, **caractérisée en ce que** les pistes circulaires (17) sont situées sur une partie fixe de la vanne et **en ce que** les fiches sont situées sur une partie mobile de la vanne.

27. Vanne de commande selon l'une des revendications 25 et 26, prise en combinaison avec la revendication 14, **caractérisée en ce que** la partie mobile de la vanne est la roue d'entraînement (33) des moyens de motorisation (36).

28. Vanne de commande selon la revendication 22 prise en combinaison avec la revendication 15, **caractérisée en ce qu'**elle comprend un connecteur, relié aux moyens de transmission d'informations de la vanne, pour transmettre les valeurs mesurées au microprocesseur (39) et/ou au calculateur.

29. Circuit de circulation de fluide, **caractérisé en ce qu'**il comprend une vanne de commande selon l'une des revendications 1 à 28, dont l'entrée de fluide (18) est reliée à une source de fluide (64) et dont les sorties de fluide (20, 22, 24) sont reliées respectivement à des branches (66, 72, 74) du circuit.

30. Circuit de circulation de fluide selon la revendication 29, **caractérisé en ce qu'**il est réalisé sous la forme d'un circuit de refroidissement (60) d'un moteur thermique (62) de véhicule automobile, qui est parcouru par un fluide de refroidissement sous l'action d'une pompe de circulation (78), et **en ce que** la vanne de commande (10) est une vanne à trois voies, dont l'entrée de fluide (18) est reliée à une arrivée (64) de fluide de refroidissement en provenance du moteur (62), et dont les trois sorties de fluide (20, 22, 24) sont reliées respectivement à une première branche (66) du circuit qui contient un radiateur de refroidissement (68), à une deuxième branche (72) du circuit qui constitue une dérivation du radiateur de refroidissement (68), à une troisième branche (74) du circuit qui contient un aérotherme (76) pour le chauffage de l'habitacle.

## Claims

1. Control valve for a fluid circulation circuit, comprising:
- a body (12) which is equipped with at least one fluid inlet (18) and at least two fluid outlets (20, 22, 24), and which delimits a housing for an adjusting member (26) able to rotate about an axis of rotation (XX) and to adopt various angular positions in order to control the distribution of fluid through the outlets, the said body (12) comprising a side wall (16) into which the fluid outlets (20, 22, 24) open, at axial heights and at angular positions that are chosen with respect to the axis of rotation (XX), and
- the adjusting member comprising a truncated end (38) facing toward the end wall (14) of the said body (12), the said truncated end defining a shaped part of the said adjusting member for controlling the outlets of fluid with a law defined as a function of the angular position of the rotary member in the valve body (12), **characterized in that** the said body (12) comprises a side wall (14) into which the fluid inlet (18) opens and **in that**
- the adjusting member (26) comprises, at the opposite end to the truncated end (38), two roughly diametrically opposed cylindrical wall portions (78, 80) for controlling one (24) of the fluid outlets.

2. Control valve according to Claim 1, **characterized in that** the body (12) delimits a cylindrical housing for the adjusting member (26), and **in that** the side wall (16) is a cylindrical wall, and **in that** the truncated end (38) comprises a generally flat face (40) which, with the axis of rotation (xx), forms a chosen angle (A).

3. Control valve according to Claim 2, **characterized in that** said chosen angle is close to 45°.

4. Control valve according to one of Claims 2 and 3, **characterized in that** at least one of the fluid outlets (20, 22, 24) is a radial nozzle.

5. Control valve according to one of Claims 2 and 3, **characterized in that** at least one of the fluid outlets (20, 22, 24) is a tangential nozzle.

6. Control valve according to one of Claims 1 to 5, **characterized in that** it comprises three fluid outlets (20, 22, 24).

7. Control valve according to one of Claims 1 to 6, **characterized in that** the adjusting member (26) is covered with a split ring (50) made to rotate as one with it by a projecting lug (54) that the adjusting member has.

8. Control valve according to Claim 7, **characterized in that** the split ring (50) is made of a material with a low coefficient of friction.

9. Control valve according to one of Claims 7 and 8, **characterized in that** the split ring (50) has an outside diameter slightly greater than the inside diameter of the valve body (12) prior to mounting and an inside diameter slightly greater than the diameter of the adjusting member (26) after mounting.

10. Control valve according to one of Claims 7 to 9, **characterized in that** the split ring (50) covers a region (82) of the adjusting member which is equipped with circular grooves (84).

11. Control valve according to one of Claims 1 to 10, **characterized in that** the truncated end (38) of the adjusting member (26) comprises a duct (42), having a chosen shape, advantageously the shape of an arc of a circle.

12. Control valve according to one of Claims 1 to 11, **characterized in that** the adjusting member (26) is equipped with a sealing shoe (44).

13. Control valve according to Claim 12, **characterized in that** the sealing shoe (44) is mounted on a spring (48).

14. Control valve according to one of Claims 1 to 13 **characterized in that** it comprises drive means (36) able to drive the adjusting member (26) by means of a drive wheel (33) forming part of a reduction gearbox (3) for bringing it into chosen angular positions with respect to the valve body (12).

15. Control valve according to Claim 14, **characterized in that** the valve comprises a microprocessor (39) for operating the drive means (36).

16. Control valve according to one of the preceding claims, **characterized in that** the adjusting member (26) comprises at least one internal sensor (5, 13) for measuring values relating to the operation of the fluid circulation circuit.

17. Control valve according to Claim 16, **characterized in that** the internal sensors are sensors that sense the presence of air (13) in the circuit.

18. Control valve according to Claim 16, **characterized in that** the adjusting member (26) comprises a machined duct (7) extending over the entire length of the adjusting member (26), to house the sensors (5, 13).

19. Control valve according to Claim 16, **characterized in that** a first end of the sensors (5, 13) passes through the lower end of the adjusting member (26) facing toward the end wall (14), at a chosen point, so as to be in contact with the fluid and take measurements.

20. Control valve according to Claim 19, **characterized in that** the sensors are temperature sensors (5) and **in that** the machined duct comprises a lower end made of brass, in contact with the fluid, in which to house the first end of the sensors (5).

21. Control valve according to Claim 19, **characterized in that** the second end of the sensors (5, 13) passes through the upper end of the valve (28) toward the outside to transmit the values measured by the sensors.

22. Control valve according to Claim 21, **characterized in that** the second end of the sensors is connected to information transmitting means for transmitting the values measured by the sensors to the microprocessor (39) and/or to a computer.

23. Control valve according to Claim 22, **characterized in that** the information transmitting means comprise circular electrical-contact tracks (17).

24. Control valve according to Claim 23, **characterized in that** the information transmitting means comprise plugs connected to the circular tracks (17) for transmitting the values originating from the sensors.

25. Control valve according to Claim 24, **characterized in that** the circular tracks (17) are situated on a moving part of the valve and **in that** the plugs are situated on a fixed part of the valve.

26. Control valve according to Claim 24, **characterized in that** the circular tracks (17) are situated on a fixed part of the valve and **in that** the plugs are situated on a moving part of the valve.

27. Control valve according to one of Claims 25 and 26 taken in combination with Claim 14, **characterized in that** the moving part of the valve is the drive wheel (33) of the drive means (36).

28. Control valve according to Claim 22 taken in combination with Claim 15, **characterized in that** it comprises a connecter, connected to the information transmitting means of the valve to transmit the measured values to the microprocessor (39) and/or to the computer.

29. Fluid circulation circuit, **characterized in that** it comprises a control valve according to one of Claims 1 to 28, the fluid inlet (18) of which is connected to a fluid source (64) and the fluid cutlets (20, 22, 24) of which are connected respectively to branches (66, 72, 74) of the circuit.

30. Fluid circulation circuit according to Claim 29 **characterized in that** it is produced in the form of a cooling circuit (60) for cooling the engine (62) of a motor vehicle, through which a coolant flows under the action of a circulation pump (78), and **in that** the control valve (10) is a three-way valve, the fluid inlet (18) of which is connected to a coolant inlet (64) originating from the engine (62), and the three fluid outlets (20, 22, 24) of which are connected respectively to a first branch (66) of the circuit which contains a cooling radiator (68), a second branch (72) of the circuit which constitutes a bypass of the cooling radiator (68), and to a third branch (74) of the circuit which contains a unit heater (76) for heating the cabin.

## Patentansprüche

1. Steuerventil für einen Fluidzirkulationskreislauf, umfassend:
- einen Körper (12), der mit mindestens einem Fluideingang (18) und mit mindestens zwei Fluidausgängen (20, 22, 24) versehen ist und eine Aufnahme für ein Einstellorgan (26) abgrenzt, das um eine Rotationsachse (XX) drehen und verschiedene Winkelstellungen einnehmen kann, um die Verteilung des Fluids durch die Ausgänge zu steuern, wobei der Körper (12) eine Seitenwand (16) umfasst, in welche die Fluidausgänge (20, 22, 24) in axialen Höhen und in Winkelpositionen münden, die in Bezug auf die Rotationsachse (XX) ausgewählt sind, und
- wobei das Einstellorgan ein abgestumpftes Ende (38) umfasst, das zu der Bodenwand (14) des Körpers (12) gewandt ist, wobei das abgestumpfte Ende einen geformten Teil des Einstellorgans definiert, um die Steuerung der Fluidausgänge mit einem Gesetz zu bewirken, das in Abhängigkeit von der Winkelposition des in dem Ventilkörper (12) drehenden Organs definiert ist, **dadurch gekennzeichnet, dass** der Körper (12) eine Bodenwand (14) umfasst, in welche der Fluideingang (18) mündet, und dass
- das Einstellorgan (26) dem abgestumpften Ende (38) entgegengesetzt zwei Abschnitte von einer zylindrischen Wand (78, 80) umfasst, die im Wesentlichen diametral entgegengesetzt sind, um den einen (24) der Fluidausgänge zu steuern.

2. Steuerventil nach Anspruch 1, **dadurch gekennzeichnet, dass** der Körper (12) eine zylindrische Aufnahme für das Einstellorgan (26) abgrenzt, dass die Seitenwand (16) eine zylindrische Wand ist, und dass das abgestumpfte Ende (38) eine im Allgemeinen ebene Seite (40) umfasst, die mit der Rotationsachse (XX) einen ausgewählten Winkel (A) bildet.

3. Steuerventil nach Anspruch 2, **dadurch gekennzeichnet, dass** der ausgewählte Winkel in der Nähe von 45 Grad liegt.

4. Steuerventil nach einem der Ansprüche 2 und 3, **dadurch gekennzeichnet, dass** mindestens einer der Fluidausgänge (20, 22, 24) ein radialer Rohrstutzen ist.

5. Steuerventil nach einem der Ansprüche 2 und 3, **dadurch gekennzeichnet, dass** mindestens einer der Fluidausgänge (20, 22, 24) ein tangentialer Rohrstutzen ist.

6. Steuerventil nach einem der Ansprüche 1 bis 5, **dadurch gekennzeichnet, dass** es drei Fluidausgänge (20, 22, 24) umfasst.

7. Steuerventil nach einem der Ansprüche 1 bis 6, **dadurch gekennzeichnet, dass** das Einstellorgan (26) mit einem Schlitzring (50) bedeckt ist, der in Drehung fest mit einem vorstehenden Dorn (54) verbunden ist, den das Einstellorgan umfasst.

8. Steuerventil nach Anspruch 7, **dadurch gekennzeichnet, dass** der Schlitzring (50) aus einem Werkstoff mit geringem Reibungskoeffizienten besteht.

9. Steuerventil nach einem der Ansprüche 7 und 8, **dadurch gekennzeichnet, dass** der Schlitzring (50) einen Außendurchmesser leicht größer als der Innendurchmesser des Ventilkörpers (12) vor der Montage und einen Innendurchmesser leicht größer als der Durchmesser des Einstellorgans (26) nach der Montage aufweist.

10. Steuerventil nach einem der Ansprüche 7 bis 9, **dadurch gekennzeichnet, dass** der Schlitzring (50) eine Region (82) des Einstellorgans, die mit kreisförmigen Rillen (84) versehen ist, abdeckt.

11. Steuerventil nach einem der Ansprüche 1 bis 10, **dadurch gekennzeichnet, dass** das abgestumpfte Ende (38) des Einstellorgans (26) einen Kanal (42) umfasst, der eine ausgewählte Form, vorteilhafterweise im Kreisbogen hat.

12. Steuerventil nach einem der Ansprüche 1 bis 11, **dadurch gekennzeichnet, dass** das Einstellorgan (26) mit einer Dichtkufe (44) versehen ist.

13. Steuerventil nach Anspruch 12, **dadurch gekennzeichnet, dass** die Dichtkufe (44) auf eine Feder (48) montiert ist.

14. Steuerventil nach einem der Ansprüche 1 bis 13, **dadurch gekennzeichnet, dass** es Antriebsmittel (36) umfasst, die das Einstellorgan (26) mit einem Antriebsrad (33), das zu einem Untersetzungsgetriebe (3) gehört, antreiben können, um es in Bezug auf den Ventilkörper (12) ausgewählten Winkelpositionen zu bringen.

15. Steuerventil nach Anspruch 14, **dadurch gekennzeichnet, dass** das Ventil einen Mikroprozessor (39) zum Steuern der Antriebsmittel (36) umfasst.

16. Steuerventil nach einem der vorhergehenden Ansprüche, **dadurch gekennzeichnet, dass** das Einstellorgan (26) mindestens einen internen Fühler (5, 13) zum Messen der Werte in Zusammenhang mit dem Betrieb des Fluidzirkulationskreislaufs umfasst.

17. Steuerventil nach Anspruch 16, **dadurch gekennzeichnet, dass** die internen Fühler Fühler (13) zum Festellen der Präsenz von Luft in dem Kreislauf sind.

18. Steuerventil nach Anspruch 16, **dadurch gekennzeichnet, dass** das Einstellorgan (26) einen ausgehöhlten Kanal (7) umfasst, der sich über die ganze Länge des Einstellorgans (26) zur Aufnahme der Fühler (5, 13) erstreckt.

19. Steuerventil nach Anspruch 16, **dadurch gekennzeichnet, dass** ein erstes Ende der Fühler (5, 13) das untere Ende des Einstellorgans (26), das zu der Bodenwand (14) gekehrt ist, an einer ausgewählten Stelle durchquert, um mit dem Fluid in Kontakt zu sein und Messungen durchzuführen.

20. Steuerventil nach Anspruch 19, **dadurch gekennzeichnet, dass** die Fühler Temperaturfühler (5) sind, und dass der ausgehöhlte Kanal ein unteres Ende aus Messing in Berührung mit dem Fluid umfasst, um darin das erste Ende der Fühler (5) aufzunehmen.

21. Steuerventil nach Anspruch 19, **dadurch gekennzeichnet, dass** das zweite Ende der Fühler (5, 13) das obere Ende des Ventils (28) nach außen durchquert, um die von den Fühlern gemessenen Werte zu übertragen.

22. Steuerventil nach Anspruch 21, **dadurch gekennzeichnet, dass** das zweite Ende der Fühler mit Datenübertragungsmitteln verbunden ist, um die von den Fühlern gemessenen Werte an den Mikroprozessor (39) und/oder an einen Rechner zu übertragen.

23. Steuerventil nach Anspruch 22, **dadurch gekennzeichnet, dass** die Datenübertragungsmittel kreisförmige Pisten (17) mit elektrischem Kontakt umfassen.

24. Steuerventil nach Anspruch 23, **dadurch gekennzeichnet, dass** die Datenübertragungsmittel Stecker umfassen, die mit den kreisförmigen Pisten (17) verbunden sind, um die von den Fühlern kommenden Werte zu übertragen.

25. Steuerventil nach Anspruch 24, **dadurch gekennzeichnet, dass** sich die kreisförmigen Pisten (17) auf einem beweglichen Teil des Ventils befinden, und dass sich die Stecker auf einem stationären Teil des Ventils befinden.

26. Steuerventil nach Anspruch 24, **dadurch gekennzeichnet, dass** sich die kreisförmigen Pisten (17) auf einem stationären Teil des Ventils befinden, und dass sich die Stecker auf einem beweglichen Teil des Ventils befinden.

27. Steuerventil nach einem der Ansprüche 25 und 26 kombiniert mit Anspruch 14 genommen, **dadurch gekennzeichnet, dass** der bewegliche Teil des Ventils das Antriebsrad (33) der Antriebsmittel (36) ist.

28. Steuerventil nach Anspruch 22, kombiniert mit Anspruch 15 genommen, **dadurch gekennzeichnet, dass** es einen Stecker umfasst, der mit den Datenübertragungsmitteln des Ventils verbunden ist, um die Messwerte an den Mikroprozessor (39) und/oder an den Rechner zu übertragen.

29. Fluidzirkulationskreislauf, **dadurch gekennzeichnet, dass** er ein Steuerventil nach einem der Ansprüche 1 bis 28 umfasst, dessen Fluideingang (18) mit einer Fluidquelle (64) verbunden ist, und dessen Fluidausgänge (20, 22, 24) jeweils mit Zweigen (66, 72, 74) des Kreislaufs verbunden sind.

30. Fluidzirkulationskreislauf nach Anspruch 29, **dadurch gekennzeichnet, dass** er in Form eines Kühlkreises (60) eines Verbrennungsmotors (62) eines Automobils ausgeführt ist, der von einem Kühlfluid unter Einwirkung einer Umwälzpumpe (78) durchlaufen wird, und dass das Steuerventil (10) ein Dreiwegeventil ist, dessen Fluideingang (18) mit einem Kühlmitteleinlass (64), der von dem Motor (62) kommt, verbunden ist, und dessen drei Fluidausgänge (20, 22, 24) jeweils einer mit einem ersten Zweig (66) des Kreislaufs, der einen Kühler (68) enthält, einer mit einem zweiten Zweig (72) des Kreislaufs, der eine Abzweigung des Kühlers (68) bildet, einer mit einem dritten Zweig (74) des Kreislaufs, der einen Heißlufterzeuger (76) zum Erhitzen des Fahrgastraums enthält, verbunden ist.
